# EUROPÄISCHE PATENTSCHRIFT

(11) **EP 2 193 573 B1**
(45) Veröffentlichungstag und Bekanntmachung des Hinweises auf die Patenterteilung: **29.08.2012**
(21) Anmeldenummer: 08802023.5
(22) Anmeldetag: 11.09.2008
(51) Int. Cl.: H01R 4/30, F16B 41/00, F16B 39/28

(54) **ELEKTRISCHE VORRICHTUNG**
ELECTRICAL APPARATUS
DISPOSITIF ÉLECTRIQUE

(30) Priorität: 12.09.2007 DE 102007043312; 04.10.2007 DE 102007047521
(43) Veröffentlichungstag der Anmeldung: 09.06.2010
(73) Patentinhaber: Phoenix Contact GmbH & Co. KG, 32825 Blomberg (DE)
(72) Erfinder: AXEL, Thomas, 32816 Schieder-Schwalenberg (DE)
(74) Vertreter: Michalski Hüttermann & Partner
(86) Internationale Anmeldenummer: PCT/EP2008/007462
(87) Internationale Veröffentlichungsnummer: WO 2009/033673

(56) Entgegenhaltungen:
- DE-A1- 2 947 193
- DE-A1- 3 028 958
- DE-A1- 4 038 362
- DE-U- 7 339 100
- FR-A- 1 173 759

## Beschreibung

Die Erfindung betrifft eine elektrische Vorrichtung mit Schraubklemme.

Eine derartige elektrische Vorrichtung mit Schraubklemme ist allgemein bekannt und bspw. in der DE 30 28 958 C2 offenbart. Die bekannte elektrische Vorrichtung ist als Reihenklemme mit einem Gehäuse aus Isolierstoff ausgeführt. Das Gehäuse weist einen runden Schacht mit einer darin angeordneten Schraube auf. Der Schacht führt zu einem Innengewinde einer Klemmhülse über die elektrische Leiter angeschlossen werden können.
Der Schraubenkopf weist eine Schraubendreheröffnung auf. Ein Schraubendreher kann mit seiner Klinge über die Schachtöffnung mit der darin liegenden Schraubendreheröffnung der Schraube in Eingriff gebracht werden, so dass die Schraube mit ihrem Gewindeschaft in das Innengewinde der Klemmhülse gedreht werden kann. Hierdurch wird ein in die Klemmhülse eingeführter elektrischer Leiter geklemmt.
Zur Sicherung der Position einer nur teilweise in das Innengewinde eingedrehten Schraube sind an der Innenseite des Schachtes axial ausgerichtete Rippen vorgesehen. An diesen Stellen ist der Innendurchmesser des Schachtes kleiner als der Außendurchmesser des Schraubenkopfes ausgeführt. Somit wird der Schraubenkopf über die Rippen in radialer Richtung kraftschlüssig gehalten, wodurch teilweise ein ungewolltes, bspw. durch Vibrationen verursachtes, Verdrehen oder sogar Verlieren der Schraube verhindert werden kann. FR 1.173.759 offenbart eine elektrische Vorrichtung gemäß Oberbegriff des Anspruchs 1.
Die Anwender von elektrischen Vorrichtungen mit Schraubklemmen fordern einerseits, dass bei Auslieferung der elektrischen Vorrichtung die Schraube mit ihrem Gewindeschaft bereits in Eingriff mit dem Innengewinde der Klemmhülse steht, damit eine Beschädigung der Gewindegänge durch ungenaues Ausrichten der Schraube auf dem Innengewinde der Klemmhülse ausgeschlossen wird und ohne Zeitverlust ein in die Klemmhülse eingeführter elektrischen Leiter einfach durch Eindrehen der Schraube sofort geklemmt werden kann.
Andererseits besteht die Forderung, dass die Schraube nur so weit mit dem Innengewinde in Eingriff steht, dass auch elektrische Leiter mit einem maximal zulässigen Durchmesser über die Klemmenöffnung in die Klemmhülse geführt werden können. Dies ist jedoch nicht gegeben, wenn der Gewindeschaft über eine bestimmte Tiefe mit dem Innengewinde im Eingriff steht, weil mit zunehmender Eindringtiefe die Klemmenöffnung verkleinert wird.
In diesem Fall muss für den Anschluss eines dicken elektrischen Leiters die Schraube soweit nach oben gedreht und die Klemmenöffnung geöffnet werden, dass der elektrische Leiter noch über die Klemmenöffnung in die Klemmhülse eingeführt werden kann. Da jedoch in der Regel motorische Schraubendreher eingesetzt werden, wird die Schraube häufig allerdings so weit gelöst, dass ihr Gewindeschaft nicht mehr in Eingriff mit dem Innengewinde steht. In diesem Fall muss der Gewindeschaft zunächst wieder auf das Innengewinde ausgerichtet werden, um sicherzustellen, dass die Schraube nicht schief eingedreht wird und das Innengewinde beschädigt wird.
Somit ist es von zentraler Bedeutung, dass bei Auslieferung der elektrischen Vorrichtung der Gewindeschaft und in das Innengewinde mit einer derart vorbestimmten Eingriffstiefe eingedreht ist, dass auch elektrische Leiter mit einem maximal zulässigen Durchmesser über die Klemmenöffnung in die Klemmhülse geführt werden können.
Ausgehend von dem eingangs genannten Stand der Technik liegt der Erfindung daher die Aufgabe zugrunde, sicher zu stellen, dass bei einer elektrische Vorrichtung mit Schraubklemme ein Verdrehen der Schraube durch Vibrationen und/oder Schwingungen sicher verhindert wird. Diese Aufgabe wird durch die Merkmale der elektrischen Vorrichtung des Anspruchs 1 gelöst.

Die erfindungsgemäße elektrische Vorrichtung mit Schraubklemme zum Anschluss von elektrischen Leitern nach Anspruch 1 umfasst ein Gehäuse mit einem Schacht, in dem eine Schraube mit einer Schraubendreheröffnung vorgesehen ist, welche durch den Schacht radial umschlossen ist und nur über ihre Schraubendreheröffnung gezielt drehbar ist, wobei der Schraubenkopf und der Schacht derart aufeinander abgestimmt sind, dass bei einer Umdrehung der Schraube in einem ersten Drehwinkelbereich ein minimales Drehmoment und in einen zweiten Drehwinkelbereich ein maximales Drehmoment durchlaufen wird. Befindet sich die Schraube in dem ersten Drehwinkelbereich, bewirken Vibrationen und/oder Schwingungen, dass sich die Schraube allein innerhalb des ersten Drehwinkelbereichs in und gegen den Uhrzeigersinn dreht, ohne jedoch in den zweiten Drehwinkelbereich zu gelangen. Vorraussetzung hierfür ist natürlich, dass das Drehmoment in dem zweiten Drehwinkelbereich entsprechend groß ist.
Auch wird mit der vorliegenden Erfindung erreicht werden, dass die Schraubendreheröffnung exakt zu dem Gehäuse ausgerichtet werden kann, wenn der erste Drehwinkelbereich besonders klein gewählt ist. Dies bietet den enormen Vorteil, dass Schraubautomaten aufgrund der immer gleichen Position der Schraubendreheröffnung zum Gehäuse verwendet werden können und somit das Anschließen und Klemmen von elektrischen Leitern in einfacher Weise voll automatisiert werden kann. Diese Automatisierung führt zu enormen Kostenersparnissen bei Anschluss von elektrischen Leitern.
Besonders einfach können die vorgenannten Drehwinkelbereiche dadurch realisiert werden, dass zwischen dem Schraubenkopf und dem Schacht in dem ersten Drehwinkelbereich eine Spielpassung und dem zweiten Drehwinkelbereich eine Presspassung vorgesehen sind.
Diese Art der Realisierung ist besonders vorteilhaft, weil durch die Spielpassung in dem ersten Drehwinkelbereich eine bleibende Deformation und Verformung des Schachtes ausgeschlossen werden kann. Eine bleibende Deformation ist besonders nachteilhaft, weil sie unkontrolliert ist, und sich durch die unkontrollierte Deformation somit unbestimmbar das Drehmoment beim Festdrehen oder Lösen der Schraube verändert. Ggf. kann sogar die Drehung der Schraube vollständig blockiert sein. Der Grad der Deformation ist abhängig von dem Schachtmaterial, der Lagerzeit der elektrischen Vorrichtung sowie den klimatischen Bedingungen. Somit bietet die erfindungsgemäße elektrische Vorrichtung zusätzlich den Vorteil, dass der Einfluss der Lagerzeit und der klimatischen Lagerbedingungen weitgehend ohne Relevanz sind, wenn sich die Schraube in dem Schacht bei Lagerung der elektrischen Vorrichtung in der Spielpassung befindet. Ferner sind die Möglichkeiten bei der Auswahl des Materials von dem Schacht größer.
Die unterschiedlichen Passungen können dadurch ausgeführt, dass der Schraubenkopf einen maximalen Schraubenkopfdurchmesser und einen gegenüber diesen reduzierten Schraubenkopfdurchmesser aufweist, wobei der Schacht einen zum maximalen Schraubenkopfdurchmesser korrespondierenden ersten Schachtdurchmesser und einen kleineren zweiten Schachtdurchmesser enthält.
Zudem ist vorgesehen, dass die Mantelfläche des Schraubenkopfes im Bereich des maximalen Schraubenkopfdurchmessers gekrümmt und im Bereich des reduzierten Schraubenkopfdurchmessers eben ausgeführt ist.
Dadurch, dass die Mantelfläche im Bereich des maximalen Schraubenkopfdurchmessers gekrümmt ist, wird sichergestellt, dass es beim Drehen der in dem Schraubenschacht eingesetzten Schraube nicht zu mechanischen Beschädigungen des Schachtes kommt. Bei dieser Schraubenkopfgeometrie folgt zwangsläufig auf eine gekrümmte Mantelfläche und ebene Mantelfläche und umgekehrt. Im Übergangsbereich zwischen der gekrümmten und ebenen Mantelfläche ist eine Kante ausgebildet. Diese Kante ist aufgrund der vorgenannten Abfolge der Mantelflächen weniger scharfkantig ausgebildet als herkömmlich verwendeten Vieleckschrauben. Denn bei diesen Vieleckschrauben werden die umfangseitigen Ecken respektive Kanten des Schraubenkopfes durch aufeinander folgende ebene Flächen gebildet. Hierdurch ergeben sich im scharfe Kanten bzw. Ecken an dem Schraubenkopf.
Zweckmäßigerweise ist bei dieser Ausführung vorgesehen, dass der Schraubenkopf einen maximalen Schraubenkopfdurchmesser und einen gegenüber diesen reduzierten Schraubenkopfdurchmesser aufweist, wobei der Schacht einen zum maximalen Schraubenkopfdurchmesser korrespondierenden ersten Schachtdurchmesser und einen kleineren zweiten Schachtdurchmesser enthält, wobei der zweite Schachtdurchmesser durch die Anordnung von Rippen innerhalb des Schachtes ausgeführt ist.
Diese Ausführung ist vorteilhaft, weil der Schacht mit den zwei Durchmesserbereichen bereits bekannt ist und somit die Erfindung in einfacher Weise dadurch erreicht werden kann, dass der Schraubenkopfdurchmesser an einer oder mehreren Stellen reduziert wird.
Es ist in einer Weiterbildung der Erfindung vorgesehen, dass die Schraubendreheröffnung als Schlitz ausgebildet ist, der die Mantelfläche des Schraubenkopfes zumindest an einer Durchbruchstelle durchbricht, wobei an der Durchbruchstelle der Schraubenkopfdurchmesser gegenüber anderen Bereichen des Schraubenkopfes reduziert ist. Diese Weiterbildung ist bevorzugt und besonders vorteilhaft, weil durch die Reduzierung des Schraubenkopfdurchmesser an der Durchbruchstelle verhindert wird, dass ein sich bei der Fertigung des Schlitzes gebildeter radial abstehender Grad in Berührung mit dem Schacht kommt. Vorraussetzung hierfür ist natürlich, dass eine Spielpassung zwischen dem Schacht und dem Schraubenkopfdurchmesser an der Durchbruchstelle vorgesehen ist, die größer als der radial abstehende Grad ist.
Fertigungstechnisch ist es besonders einfach, wenn die Mantelfläche des Schraubenkopfes an der Durchbruchstelle eben und plan ausgeführt ist. Dies kann bspw. einfach durch Stauchen des Schraubenkopfes erreicht werden. Ferner wird durch die Anordnung des reduzierten Schraubenkopfdurchmessers an der Durchbruchstelle erreicht, dass im Laufe des Fertigungsprozesses, in dem zunächst der Schraubenkopf mit seinem reduziertem Schraubenkopfdurchmesser komplett gefertigt werden kann und anschließend der Schlitz in den Schraubenkopfdurchmesser eingebracht werden kann, ein Entgraten nicht mehr notwendig ist. Falls der Grat besonders lang ist, würde ein einfaches Wegstoßen der Gratspitze bereits ausreichen, um bei Drehung der in dem Schacht vorgesehenen Schraube einen Kontakt des scharfen Grates zum Schacht bzw. der Schachtinnenseite zu vermeiden. Somit kann die Schachtinnenseite in besonders einfacher Weise vor mechanischen Beschädigungen geschützt werden.
Die Herstellung einer elektrischen Vorrichtung mit einer Schraubklemme zum Anschluss von elektrischen Leitern, umfassend ein Gehäuse mit einem Schacht, in dem eine Schraube mit einer Schraubendreheröffnung vorgesehen ist, welche durch den Schacht radial umschlossen ist und nur über ihre Schraubendreheröffnung gezielt drehbar ist, wobei der Schraubenkopf und der Schacht derart aufeinander abgestimmt sind, dass bei einer Umdrehung der Schraube in einem ersten Drehwinkelbereich ein minimales Drehmoment und in einen zweiten Drehwinkelbereich ein maximales Drehmoment durchlaufen wird,
ist besonders effizient, wenn folgende Schritte:
a) Fertigen des Schraubenkopfes mit unterschiedlichen Schraubenkopfdurchmessern
b) Einbringen einer Schraubendreheröffnung
c) Einführen der Schraube in den Schacht der elektrischen Vorrichtung
durchgeführt werden. Vorteilhaft bei dieser Trennung der Verfahrensschritte ist, dass spanlose und spanabhebene Verfahren (Stauchen des Schraubenkopfes, Sägen des Schlitzes) getrennt sind, so dass jeder Verfahrensschritt auf einer Fertigungsstation in einem Fertigungsautomaten ausgeführt werden kann. Des Weiteren ist es vorteilhaft, wenn diese Fertigungsschritte in einer Aufspannung erfolgen. Hierdurch kann somit eine hohe Stückzahl pro Zeiteinheit realisiert werden.
Zur besonders exakten Ausrichtung der Schraubendreheröffnung wird bei dem o.g. Verfahren zur Herstellung der elektrischen Vorrichtung vorgeschlagen, dass die Schraube bis zu einer vorbestimmten Gewindeeingriffstiefe in ein Gewinde der elektrischen Vorrichtung gedreht wird, wobei anschließend die Schraube soweit vor oder zurückgedreht wird, bis in einem ersten Drehwinkelbereich das minimale Drehmoment vorliegt. Vorzugsweise ist dabei die Größe des ersten Drehwinkelbereichs an die Genauigkeitserfordernisse hinsichtlich der Ausrichtung der Schraubendreheröffnung zu dem Gehäuse angepasst. Vorteilhaft ist hierbei auch eine Rastverbindung vorzusehen.
Die erfindungsgemäße elektrische Vorrichtung, das Verfahren zur Herstellung der elektrischen Vorrichtung sowie die Verwendung einer Schraube in der elektrischen Vorrichtung sind nachstehend in einem Ausführungsbeispiel beispielhaft an einer Schraubklemme beschrieben und zeichnerisch dargestellt.

In der Zeichnung zeigen
- Fig. 1: eine erfindungsgemäße elektrische Vorrichtung mit Schraubklemmen umfassend einen Schacht, in dem die Schraube eingesetzt ist, in perspektivischer Ansicht mit Blick auf die Schraube und den Schacht im Schnitt,
- Fig. 2: in Draufsicht die elektrische Vorrichtung aus Figur 1 in einem ersten Drehwinkelbereich,
- Fig. 3: die elektrische Vorrichtung aus Figur 1 in Perspektive mit Blick auf ihre Klemmenöffnungen zum Einführen von elektrischen Leitern,
- Fig. 4: die Schraubklemmen der elektrischen Vorrichtung aus Figur 1 in Perspektive mit Blick auf ihre Klemmenöffnungen,
- Fig. 5: in Draufsicht einen Ausschnitt der elektrischen Vorrichtung aus Figur 1, wobei sich der Schraubenkopf in dem ersten Drehwinkelbereich befindet, in dem die Schraube leichtgängig ist,
- Fig. 6: in Draufsicht einen Ausschnitt der elektrischen Vorrichtung aus Figur 1, wobei sich der Schraubenkopf am Ende des ersten Drehwinkelbereichs befindet,
- Fig. 7: in Draufsicht einen Ausschnitt der elektrischen Vorrichtung aus Figur 1, wobei sich der Schraubenkopf in einem zweiten Drehwinkelbereich befindet, in dem die Schraube schwergängig ist und
- Fig. 8: als Ausbruch die Schraubklemme aus einer elektrischen Vorrichtung geschnitten und in Draufsicht, wobei der Schraubenkopf einen Rücksprung in Art einer Rastnut aufweist, wobei der Schacht ein korrespondierendes Gegenrastelement aufweist.

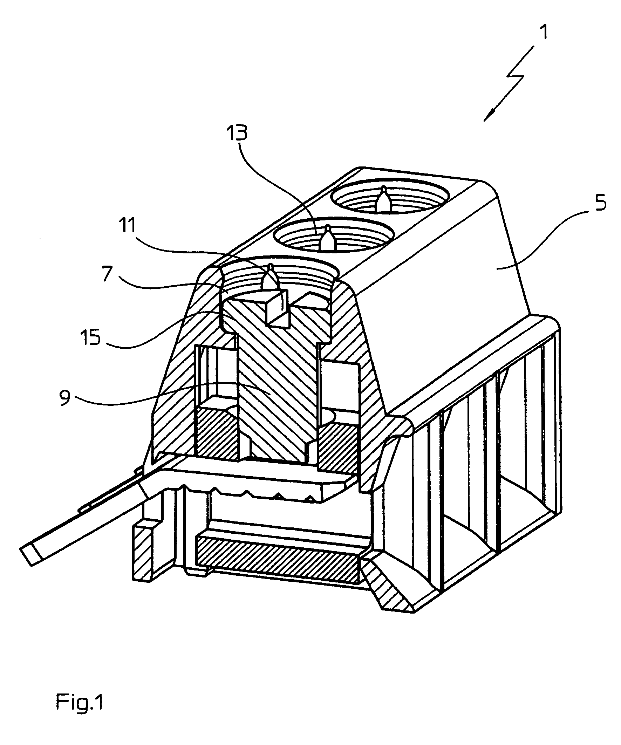

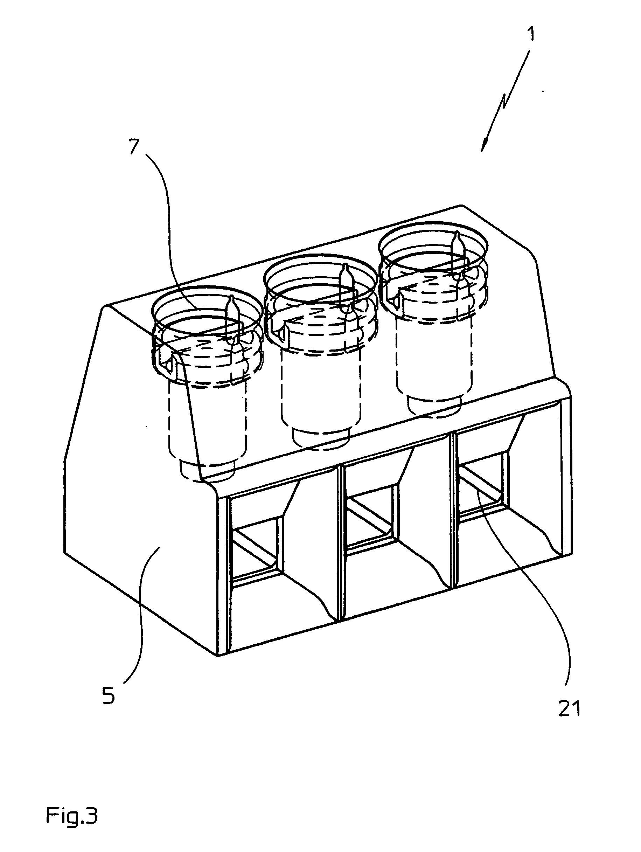

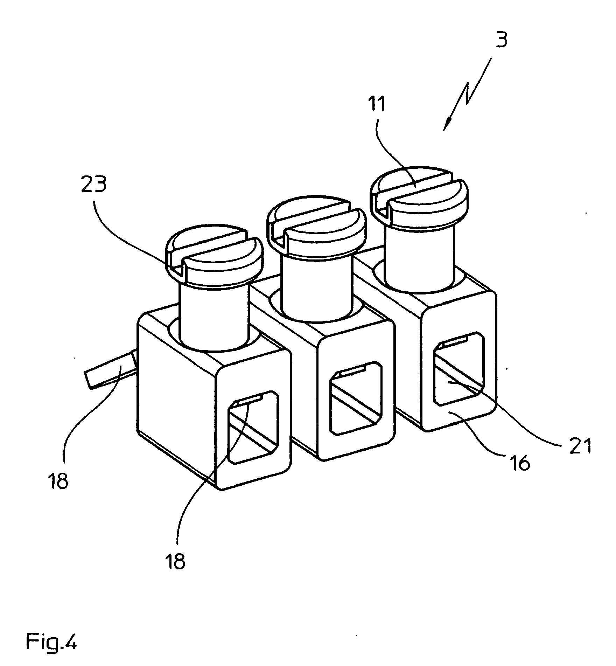

In den Figuren 1 bis 3 ist eine elektrische Vorrichtung 1 mit einer Schraubklemme 3 zum Anschluss von elektrischen Leitern (nicht dargestellt) gezeigt. Sie umfasst ein Gehäuse 5 mit einem Schacht 7, in dem eine Schraube 9 mit einer Schraubendreheröffnung 11 vorgesehen ist. Der Schacht 7 umschließt die Schraube 9 gem. Fig. 1 umfangseitig in radialer Richtung vollständig. Die Schraube 9 selbst ist somit umfangsseitig nicht zugänglich. Sie kann deshalb nur über einen in ihre Schraubendreheröffnung 11 eingeführten Schraubendreher (nicht dargestellt) gezielt gedreht und festgezogen werden. Der Klinge des Schraubendrehers kann durch die Schachtöffnung 13 in die Schraubendreheröffnung 11 geführt und eingesetzt werden. Über den Schacht 7 ist die Schraube 9 zu der in Fig. 4 gezeigten Schraubklemme 3 geführt. Die Schraubklemme 3 umfasst ein an sich bekanntes und deshalb nicht näher beschriebenes Klemmengehäuse 16 mit einem Druckstück 18, einer Klemmenöffnung 21 und einem Innengewinde (nicht gezeigt) als Gegenstück für den Gewindeschaft der Schraube 9. Die Schraube greift bei den vorliegenden Ausführungen mit ihrem Gewindeschaft in das Innengewinde ein.
Dabei sind der Schraubenkopf 15 und der Schacht 7 derart aufeinander abgestimmt sind, dass bei einer Umdrehung der Schraube 9 in einem ersten Drehwinkelbereich ein minimales Drehmoment und in einen zweiten Drehwinkelbereich ein maximales Drehmoment durchlaufen wird.
Vorzugsweise wird die Aufteilung in unterschiedliche Drehmomente bei einer Umdrehung der Schraube 9 dadurch erreicht, dass zwischen dem Schraubenkopf 15 und dem Schacht 7 in dem ersten Drehwinkelbereich eine Spielpassung 17 und in dem zweiten Drehwinkelbereich eine Presspassung 19 vorliegt. Die Realisierung der Spielpassung 17 und der Presspassung 19 lässt sich dadurch erreichen, dass der Schraubenkopf 15 unterschiedliche Schraubenkopfdurchmesser D1, D2 hat, wobei der Schacht 7 einen zum maximalen Schraubenkopfdurchmesser D1 korrespondierenden ersten Schachtdurchmesser DS1 und einen kleineren zweiten Schachtdurchmesser DS2 enthält. Der erste Schachtdurchmesser DS1 sollte ein klein wenig größer als der maximale Schraubenkopfdurchmesser D1 sein, wobei der zweite Schachtdurchmesser DS2 in jedem Fall kleiner als der maximale Schraubenkopfdurchmesser D1 ausgeführt ist. Der zweite Schachtdurchmesser D2 wird vorzugsweise durch die Anordnung von Rippen in dem Schacht 7 realisiert.

Wie insbesondere aus den Figuren gut ersichtlich ist, ist die Mantelfläche des Schraubenkopfes 15 im Bereich des maximalen Schraubenkopfdurchmessers D1 gekrümmt und im Bereich des reduzierten Schraubenkopfdurchmessers D2 eben ausgeführt.

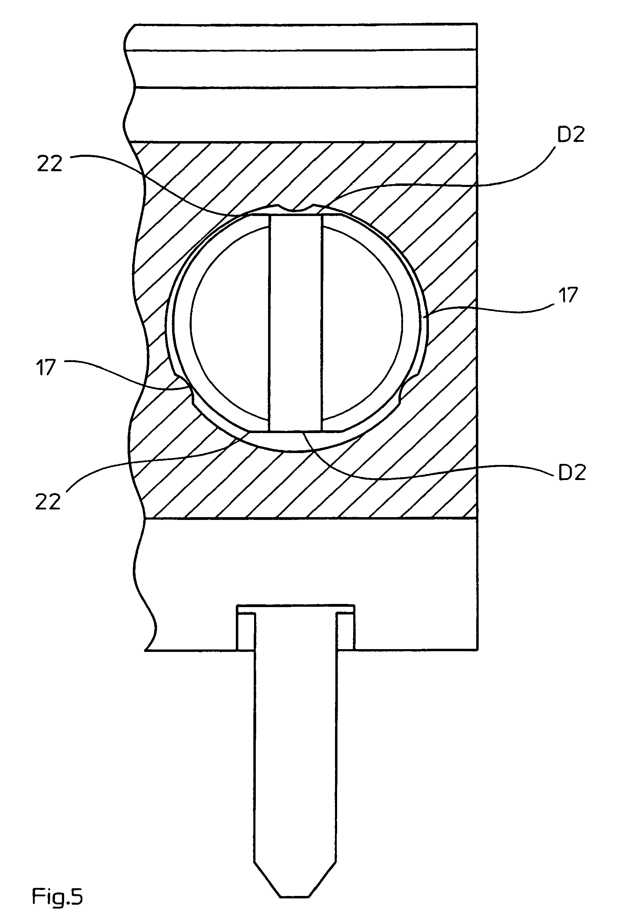

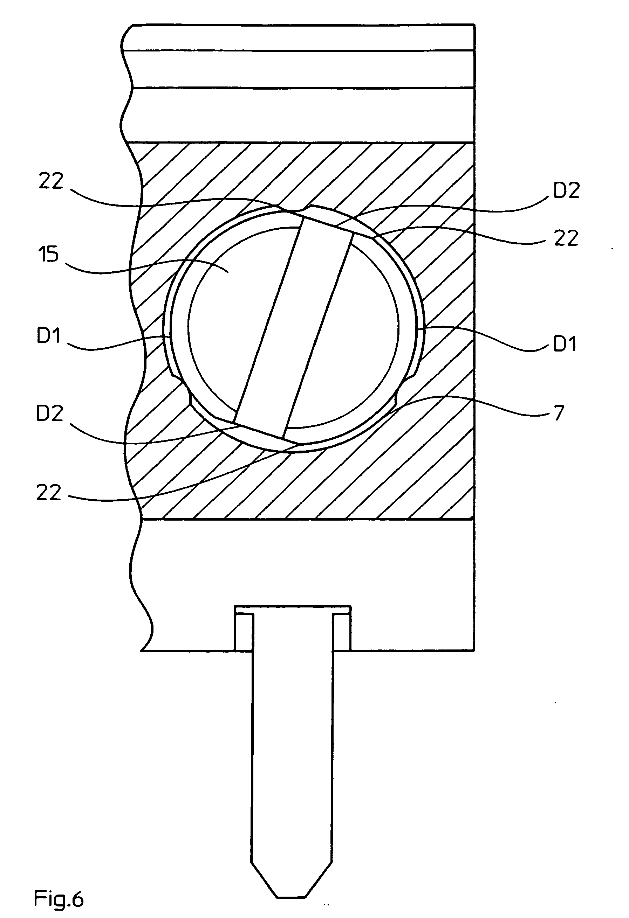

Der Schraubenkopf 15 hat, wie in Fig. 6 gekennzeichnet, einen ersten Bereich mit einem maximalen Schraubenkopfdurchmesser D1 und einen zweiten Bereich mit einem hierzu reduzierten Schraubenkopfdurchmesser D2. Gemäß der vorliegenden Ausführung nach den Fig. 1 bis 7 liegt in dem zweiten Bereich eine plan und eben ausgebildete Mantelfläche. Die mit 22 in Fig. 5 u. 6 bezeichneten Ecken grenzen die Bereiche mit dem reduzierten Schraubenkopfdurchmesser D2 zu den Bereichen mit dem maximalen Schraubenkopfdurchmesser D1 ab.

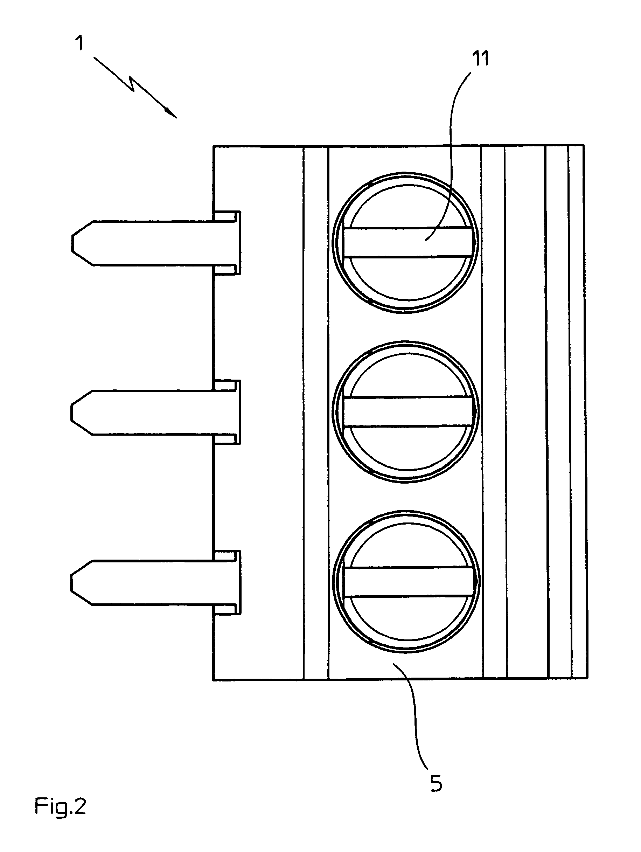

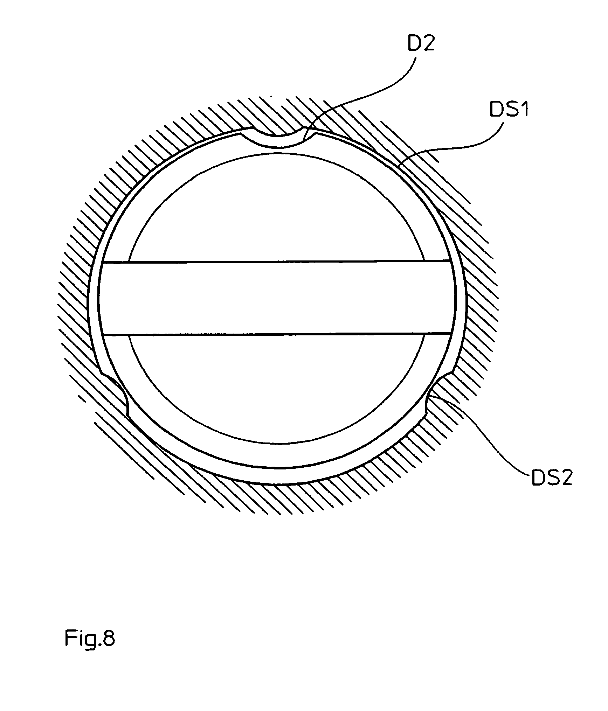

Alternativ könnte gemäß Fig. 8 in einer nicht dem Gegenstand der Erfindung gehörenden Ausführung der zweite Bereich mit dem reduzierten Schraubenkopfdurchmesser D2 auch als Rücksprung in Art einer Rastnut ausgebildet sein, derart, dass bei einer Umdrehung der Schraube 9 der Schraubenkopf 15 über seinen Rücksprung mit einem Gegenrastelement des Schraubenkopfes 15 verrastet. Als Gegenrastelement bietet sich eine in dem Schacht 7 angeordnete Rippe an.
Gemäß den Figuren 1 bis 7 ist die Schraubendreheröffnung 11 als Schlitz ausgebildet, der die Mantelfläche des Schraubenkopfes 15 zumindest an einer Durchbruchstelle 23 (s. Fig. 4) durchbricht, wobei an der Durchbruchstelle 23 der reduzierte Schraubenkopfdurchmesser D2 vorgesehen ist. Vorzugsweise ist die Mantelfläche des Schraubenkopfes 15 an der Durchbruchstelle 23 gemäß Fig. 4 eben und plan ausgeführt. Wie aus den Fig. 2 sowie 5 bis 7 besonders gut ersichtlich, ist die Mantelfläche an der Durchbruchstelle 23 quer zum Schlitz ausgerichtet. Dieser reduzierte Schraubenkopfdurchmesser D2 ist über die gesamte Höhe des Schraubenkopfes 15 ausgebildet. Er könnte aber alternativ auch nur an der Durchbruchstelle 22 ausgebildet sein, also nur dort wo sich ein Grad auf der Mantelfläche infolge des Schlitzes ausbilden könnte.
Figur 6 zeigt in Draufsicht einen Ausschnitt der elektrischen Vorrichtung aus Figur 1, wobei sich der Schraubenkopf 15 am Ende des ersten Drehwinkelbereichs befindet. In diesem ersten Drehwinkelbereich hat der Schraubenkopf 15 Spiel zu dem Schacht 7. D.h. zwischen dem Schraubenkopf 15 und dem Schacht 7 existiert, wenn auch in diesen Ausführungen nicht sehr deutlich gezeigt, ein Spalt. Der Spalt begründet die Leichtgängigkeit und das minimale Drehmoment beim Drehen der Schraube 9. Ein Spalt sollte theoretisch in diesem ersten Drehwinkelbereich auch zwischen den Rippen und dem Schraubenkopf 15 vorliegen. Die Rippen sind auf der Innenseite des Schachts angeordnet und bilden einen Teil des Schachts 7. Sie verringern den ersten Schachtdurchmesser DS1 auf den Schachtdurchmesser DS2.

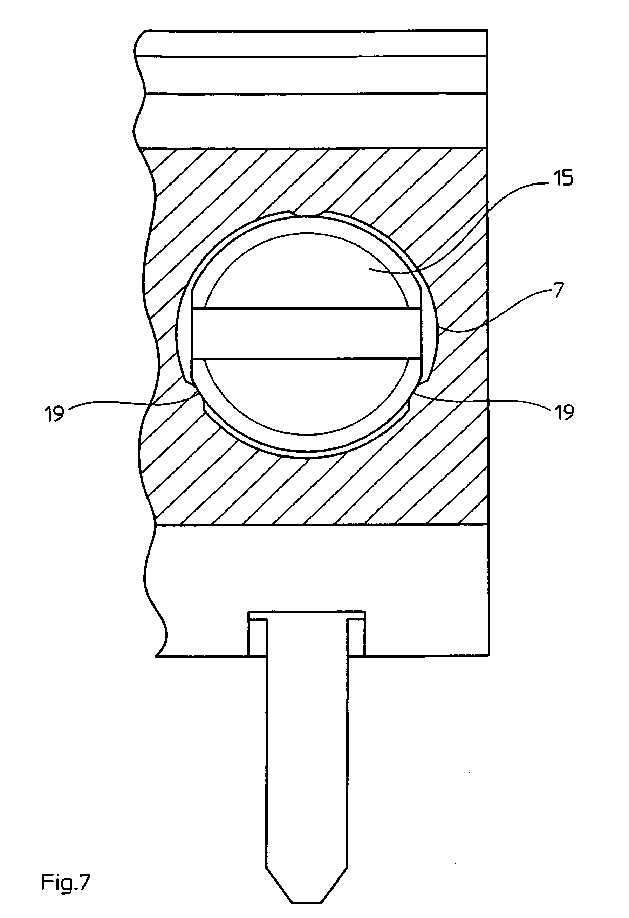

Der in Fig. 6 gezeigte Schraubenkopf 15 stößt mit ihrer Ecke 22 auf die Rippe des Schachtes 7. Dies ist der Grenzbereich zwischen der Spielpassung 17 und der Presspassung 19 bezogen auf den Schraubenkopf 15 und den Schacht 7. Wird die Schraube 9 aus der in Fig. 6 gezeigten Stellung entgegen dem Uhrzeigersinn gedreht, so gelangt die Schraube 9 in den ersten Drehwinkelbereich, in sie sich leichtgängig bewegen lässt, weil sie sich der Schraubenkopf 15 mit dem Schacht 7 in einer Spielpassung 17 gemäß Fig. 5 befindet. Wird die Schraube 9 in Uhrzeigersinn gedreht, so überfährt sie die Ecke 22 und eine Drehmomentspitze und gelangt in den zweiten Drehwinkelbereich, in dem ein maximales Drehmoment vorliegt, weil sich der Schraubenkopf 15 mit dem Schacht 7 in einer Presspassung 19 gem. Fig. 7 befindet.

### Bezugszeichenliste

| | |
|---|---|
| Elektrische Vorrichtung | 1 |
| Schraubklemme | 3 |
| Gehäuse | 5 |
| Schacht | 7 |
| Schraube | 9 |
| Schraubendreheröffnung | 11 |
| Schachtöffnung | 13 |
| Schraubenkopf | 15 |
| Klemmengehäuse | 16 |
| Spielpassung | 17 |
| Druckstück | 18 |
| Presspassung | 19 |
| Klemmenöffnung | 21 |
| Ecke | 22 |
| Durchbruchstelle | 23 |
| | |
| Maximaler Schraubenkopfdurchmesser | D1 |
| Reduzierter Schraubenkopfdurchmesser | D2 |
| Erster Schachtdurchmesser | DS1 |
| Zweiter Schachtdurchmesser | DS2 |

## Patentansprüche

1. Elektrische Vorrichtung (1) mit einer Schraubklemme (3) zum Anschluss von elektrischen Leitern, umfassend ein Gehäuse (5) mit einem Schacht (7) , in dem eine Schraube (9) mit einer Schraubendreheröffnung (11) vorgesehen ist, welche durch den Schacht (7) radial umschlossen ist und nur über ihre Schraubendreheröffnung (11) gezielt drehbar ist, wobei
der Schraubenkopf (15) und der Schacht (7) derart auf einander abgestimmt sind, dass bei einer Umdrehung der Schraube (9) in einem ersten Drehwinkelbereich ein minimales Drehmoment und in einem zweiten Drehwinkelbereich ein maximales Drehmoment durchlaufen wird, wobei
der Schraubenkopf (15) einen maximalen Schraubenkopfdurchmesser (D1) und einen gegenüber diesen reduzierten Schraubenkopfdurchmesser (D2) aufweist, wobei der Schacht (7) einen zu dem maximalen Schraubenkopfdurchmesser (D1) korrespondierenden ersten Schachtdurchmesser (DS1) und einen kleineren zweiten Schachtdurchmesser (DS2) enthält, **dadurch gekennzeichnet, daß**
die Mantelfläche des Schraubenkopfes (15) im Bereich des maximalen Schraubenkopfdurchmessers (D1) gekrümmt und im Bereich des reduzierten Schraubenkopfdurchmessers (D2) eben ausgeführt ist, so dass auf eine gekrümmte Mantelfläche eine ebene Mantelfläche folgt und umgekehrt.

2. Elektrische Vorrichtung (1) nach Anspruch 1, wobei in dem Übergangsbereich zwischen der gekrümmten Mantelfläche und der ebenen Mantelfläche eine Kante (22) ausgebildet ist.

3. Elektrische Vorrichtung (1) nach einem der vorhergehenden Ansprüche, wobei zwischen dem Schraubenkopf (15) und dem Schacht (7) in dem ersten Drehwinkelbereich eine Spielpassung (17) und dem zweiten Drehwinkelbereich eine Presspassung (19) vorliegt.

4. Elektrische Vorrichtung (1) nach dem vorhergehenden Anspruch, wobei der zweite Schachtdurchmesser (DS2) durch die Anordnung von Rippen innerhalb des Schachtes (7) ausgeführt ist.

5. Elektrische Vorrichtung (1) nach einem der vorhergehenden Ansprüche, wobei der Schraubenkopf (15) und der Schacht (7) derart aufeinander abgestimmt sind, dass bei einer Umdrehung der Schraube (9) der Schraubenkopf (15) und der Schacht (7) miteinander verrasten.

6. Elektrische Vorrichtung (1) nach einem der vorhergehenden Ansprüche, wobei die Schraubendreheröffnung (11) als Schlitz ausgebildet ist, der die Mantelfläche des Schraubenkopfes (15) zumindest an einer Durchbruchstelle (23) durchbricht, wobei an der Durchbruchstelle (23) der Schraubenkopfdurchmesser (D2) gegenüber anderen Bereichen des Schraubenkopfes (15) reduziert ist.

7. Elektrische Vorrichtung (1) nach dem vorhergehenden Anspruch, wobei die Mantelfläche des Schraubenkopfes (15) an der Durchbruchstelle (23) eben und plan ausgeführt ist.

8. Elektrische Vorrichtung (1) nach einem der vorhergehenden Ansprüche, wobei an der Durchbruchstelle (23) die Mantelfläche quer zu dem Schlitz ausgerichtet ist.

9. Elektrische Vorrichtung (1) nach einem der vorhergehenden Ansprüche, wobei der Schraubenkopfdurchmesser (D2) an der Durchbruchstelle (23), von dem Schraubenkopf (15) in Richtung der Schraubenspitze betrachtet, nur bis zum Grund des Schlitzes reduziert ausgeführt ist.

10. Elektrische Vorrichtung (1) nach einem der vorhergehenden Ansprüche 1 bis 8, wobei der Schraubenkopfdurchmesser (D2) an der Durchbruchstelle (23) über ihre, von dem Schraubenkopf (15) in Richtung der Schraubenspitze betrachtet, gesamte Höhe reduziert ausgeführt ist.

11. Elektrische Vorrichtung (1) nach einem der vorhergehenden Ansprüche, wobei der Schraubenkopf (15) zwei gegenüberliegende Durchbruchstellen (23) aufweist, an denen jeweils seine Mantelfläche eben und plan ausgebildet ist, wobei diese beiden Mantelflächen gegenüberliegend angeordnet sind.

## Claims

1. Electrical apparatus (1) with terminal screw (3) for the purpose of connection of electrical conductors, encompassing a housing (5) with a shaft (7) in which is provided a screw (9) with a screw driver opening (11), said screw is radially enclosed by the shaft (7) and specifically turnable only by means of its screw driver opening (11), whereby
the screw head (15) and the shaft (7) are adjusted relative to one another in such a way that during a revolution of the screw (9) in a first rotational angle range a minimal torsional moment and in a second rotational angle range a maximum torsional moment is traversed, whereby
the screw head (15) features a maximal screw head diameter (D1) and, relative to it, a reduced screw head diameter (D2), wherein the shaft (7) has a first shaft diameter (DS1), which corresponds to the maximal screw head diameter (D1), and a smaller second shaft diameter (DS2),
**characterized in that**
the surface area of the screw head (15) is curved in the range of the maximal screw head diameter (D1) and planar in the range of the reduced screw head diameter (D2) in such a way that a curved surface area necessarily follows a planar surface area and vice versa.

2. Electrical apparatus (1) according to the previous claim, whereby in the transition area between the curved surface area and the planar surface area a corner (22) is implemented.

3. Electrical apparatus (1) according to any of the previous claims, whereby between the screw head (15) and the shaft (7) there is in the first rotational angle range a clearance fit (17) and a press fitting (19) in the second rotational angle range.

4. Electrical apparatus (1) according to the previous claim, whereby the second shaft diameter (DS2) comprises an arrangement of ribs within the shaft (7).

5. Electrical apparatus (1) according to any of the previous claims, whereby the screw head (15) and the shaft (7) are adjusted relative to one another in such a way that during a revolution of the screw (9) the screw head (15) and the shaft (7) interlock with one another.

6. Electrical apparatus (1) according to any of the previous claims, whereby the screw driver opening (11) comprises a slit that breaks the surface area of the screw head (15) in at least one opening (23), whereby in the area of the opening (23) the screw head diameter (D2) is reduced relative to other areas of the screw head (15).

7. Electrical apparatus (1) according to the previous claim, whereby the surface area of the screw head (15) is planar and flat at the opening (23).

8. Electrical apparatus (1) according to any of the previous claims, whereby at the opening (23), the surface area is aligned perpendicularly to the slit.

9. Electrical apparatus according to any of the previous claims, whereby the screw head diameter (D2) at the opening (23), viewed from the screw head (15) in the direction of the screw tip, is implemented reduced only to the bottom of the slit.

10. Electrical apparatus (1) according to any of the previous claims 1 to 8, whereby the screw head diameter (D2) at the opening (23), viewed from the screw head (15) in the direction of the screw tip, is reduced across its entire height.

11. Electrical apparatus according to any of the previous claims, whereby the screw head (15) features two openings (23) that are disposed opposite one another, at each of which the surface area of said screw head is planar and flat, wherein these two surface areas are disposed opposite one another.

## Revendications

1. Dispositif électrique (1) équipé d'une borne à vis (3) servant à raccorder des conducteurs électriques, comprenant un carter (5) pourvu d'une gaine (7) dans laquelle une vis (9) est pourvue d'une ouverture pour tournevis (11) enserrée dans le plan radial par la gaine (7) et ne pouvant être tournée que volontairement via son ouverture pour tournevis (11) ; la tête de vis (15) et la gaine (7) étant ajustées de telle sorte l'une sur l'autre qu'en cas de rotation de la vis (9) dans une première plage angulaire de rotation, un couple de rotation minimal est parcouru et que dans une deuxième plage angulaire de rotation, un couple de rotation maximal est parcouru ;
la tête de vis (15) présentant un diamètre de tête de vis (D1) maximal et un diamètre de tête de vis (D2) réduit par rapport à lui, la gaine (7) contenant un premier diamètre de gaine (DS1) correspondant au diamètre de tête de vis (D1) maximal et un deuxième diamètre de gaine (DS2) plus petit ;
**caractérisé en ce que** :
la surface d'enveloppe de la tête de vis (15) prend une forme incurvée dans la région du diamètre de tête de vis (D1) maximal et une forme plate dans la région du diamètre de tête de vis (D2) réduit, de sorte qu'une surface d'enveloppe incurvée est suivie d'une surface d'enveloppe plate et inversement.

2. Dispositif électrique (1) selon la revendication 1, une arête (22) étant réalisée dans la zone de transition entre la surface d'enveloppe incurvée et la surface d'enveloppe plane.

3. Dispositif électrique (1) selon l'une quelconque des revendications précédentes, un ajustement du jeu (17) étant prévu entre la tête de vis (15) et la gaine (7) dans la première plage angulaire de rotation ainsi qu'un ajustement serré (19) dans la deuxième plage angulaire de rotation.

4. Dispositif électrique (1) selon la revendication précédente, le deuxième diamètre de gaine (DS2) étant réalisé par agencement de nervures à l'intérieur de la gaine (7).

5. Dispositif électrique (1) selon l'une quelconque des revendications précédentes, la tête de vis (15) et la gaine (7) étant ajustées de telle sorte l'une sur l'autre qu'en cas de rotation de la vis (9), la tête de vis (15) et la gaine (7) s'encliquètent l'une l'autre.

6. Dispositif électrique (1) selon l'une quelconque des revendications précédentes, l'ouverture pour tournevis (11) prenant la forme d'une fente traversant la surface d'enveloppe de la tête de vis (15) au moins au niveau d'un point de percée (23), le diamètre de tête de vis (D2) étant réduit par rapport aux autres régions de la tête de vis (15) au niveau du point de percée (23).

7. Dispositif électrique (1) selon la revendication précédente, la surface d'enveloppe de la tête de vis (15) étant réalisée de façon plate et plane au niveau du point de percée (23).

8. Dispositif électrique (1) selon l'une quelconque des revendications précédentes, la surface d'enveloppe étant orientée transversalement par rapport à la fente au niveau du point de percée (23).

9. Dispositif électrique (1) selon l'une quelconque des revendications précédentes, le diamètre de tête de vis (D2) ne se réduisant au niveau du point de percée que jusqu'au fond de la fente (23), vue de la tête de vis (15) en direction de la pointe de vis.

10. Dispositif électrique (1) selon l'une quelconque des revendications précédentes 1 à 8, le diamètre de tête de vis (D2) se réduisant au niveau du point de percée (23) sur l'ensemble de la hauteur, vue de la tête de vis (15) en direction de la pointe de vis.

11. Dispositif électrique (1) selon l'une quelconque des revendications précédentes, la tête de vis (15) comportant deux points de percée (23) opposés au niveau desquels sa surface d'enveloppe est respectivement réalisée de façon plate, ces deux surfaces d'enveloppe étant disposées de façon opposée.
